# EUROPEAN PATENT APPLICATION

(11) **EP 2 246 786 A1**
(43) Date of publication of application: **03.11.2010**
(21) Application number: 10161213.3
(22) Date of filing: 27.04.2010
(51) Int. Cl.: G06F 9/46, G06F 9/445

(54) **Managing a shared memory region**

(30) Priority: 27.04.2009 EP 09158853
(71) Applicant: Sim-Industries B.V., 2171 KV Sassenheim (NL)
(72) Inventor: Cerutti, Stefano Antonio, 2343 SX, Oegstgeest (NL)
(74) Representative: De Vries & Metman

(57) **Abstract**

A computer-implemented method and a computer-based system for managing a shared memory region, is disclosed wherein said shared memory region enables at least two or more software programs executed at the same time to access one or more program parameters in said shared memory on the basis of mapping information and wherein said mapping information comprises one or more parameter identifiers associated with one or more memory addresses in said shared memory region. The method may comprise the steps of: providing at least one modification in the mapping information; and, providing at least one shared memory management (SMM) library configured to be statically linked to at least one of said software programs and to be dynamically linked to at least part of said shared memory region in accordance with the modified mapping information.

## Description

### Field of the invention

The invention relates to managing a shared memory region, and, in particular, though not exclusively, to a computer-implemented method of managing a memory region shared by at least two software programs, to a computer-based shared memory system and a computer program product using such a method.

### Background of the invention

Shared memory, i.e. a region in a random-access memory for storing data, in particular, program parameters which are shared and accessed between programs executed at the same time, is a basic feature of many heterogeneous software applications. The mapping information of the shared memory determines the actual meaning of each memory location in the shared memory, so that different programs of an heterogeneous application will use it for the same purpose: to store values of pre-determined parameters. This mapping is essential to every read or write access from and to the shared memory.

An example of a software application using a shared memory is given in the article by K. Norlin in NASA Technical Memorandum 104315 (1995). In this article a relatively simple simulation program is described wherein two programs, a background executive user interface program and a real-time loop for updating all flight parameters (aircraft sensors, actuator dynamics, engine, etc.) in response to the input of the user, share a common block of information.

Over the recent years flight simulation programs have become complex heterogeneous software applications, which are usually developed in so-called collaborative projects. Such project involves different groups of programming experts, each group developing one or more stand-alone software modules, wherein the modules in the project exchange data using a shared data pool.

One problem when developing a heterogeneous software application in a collaborative project is that the modules require frequent updates during initial development. New technical functionalities, modification in the hardware, software of an airplane and/or revisions in aviation law may require changes in the source code of one or more modules and subsequent recompilation of the modified source code. Modules are typically updated and recompiled at different times by different software developers, hence strict version control is required in order to manage updates of the project modules.

Moreover, changes in the modules often require changes to the memory map, thus creating the possibility for mismatch: if two modules using different maps are allowed to run concurrently, unpredictable runtime behaviour is to be expected, resulting in subtle and incomprehensible bugs. Typically these bugs are very hard to recognize and to eliminate. Hence from the above it follows that certainty that the various modules used in the project are consistent relative to each other is of critical concern.

To counter the problem of mismatches, the usual solution is to recompile the entire project every time there is a change in the memory map thereby statically linking program to the shared memory according to the new mapping. This solution is inconvenient because it is time-consuming and also requires constantly checking that no module in the project is mistakenly left un-recompiled.

Another solution would be to make the modules immune from recompilation. This could be achieved by dynamic linking, i.e. by dynamically calculating the address of each individual parameter residing in the shared memory on start-up or on demand at runtime. This approach tends to be impractical once the number of parameters in the data pool exceeds a certain number, usually in the order of a few hundred.

Moreover, engineers often require immediate access to large data blocks whose parameter names are known in advance. In that situation it is very convenient to use static linking of the shared memory, which provides a static list wherein all parameters are clearly defined. Even collaborative projects of medium complexity may easily approach hundred of thousands of parameters, so the usual choice is to assign a static shared memory map and to apply global recompilation at each change in the application.

Hence, there is a need in the prior art for a shared memory management system for collaborative projects which is immune from module recompilation upon changes to shared memory mapping.

### Summary of the invention

It is an object of the invention to reduce or eliminate at least one of the drawbacks known in the prior art. In a first aspect the invention may relate to a computer-implemented method of managing at least one memory region shared by at least two software programs, wherein each of said programs accesses one or more parameters in said shared memory region on the basis of mapping information. The method may comprise the steps of: providing at least one modification in the mapping information, and/or providing at least one shared memory management (SMM) library configured to be statically linked to at least one of said software programs and to be dynamically linked to at least part of said shared memory using the modified mapping information. In one embodiment the SMM library may comprise one or more parameters and associated references to memory addresses in the shared memory region, enabling at least one of the programs to access at least part of said shared memory region using said mapping information. In another embodiment the SMM library may comprise for a parameter in the mapping information an associated reference to a memory address in said shared memory region. In yet another embodiment the method may further comprise the step of assigning at least one address location in the shared memory region to at least one parameter in the SMM library.

The SMM library allows linking of the modules to the shared memory in accordance with the new memory mapping without the need to recompile modules. As a consequence, the only modules that need to be recompiled are those which prompted the mapping changes in the first place - because they use the newly added parameters which are only present in the new mapping -, while all other modules are kept unchanged. In other words, using the SMM library makes the new mapping backwards compatible irrespective of whether the mapping may have been extended or reduced in one or more places, swapped or switched around. Further, the use of the SMM library greatly improves the traceability of errors, since a module with an old file timestamp which is known to work well is now unlikely to cause new bugs only as a consequence of the shared memory mapping upgrade.

In one embodiment the mapping information may be provided by one or more mapping files, preferably in plain text format, comprising at least identifiers defining the parameters used in the mapping information (e.g. parameter name and parameter data type), a default value, the physical units of said default value(s) and/or a parameter comment. In one embodiment the sequence of the parameter identifiers listed in the mapping file may define the mapping. In yet another embodiment one or more parameters of at least one of the software programs may be arranged to link by name to the SMM library.

The use of mapping files allows changes in the memory mapping by simple modifications in the mapping files comprising the parameter definitions and by running a single script before compilation. In one embodiment the SMM library may be capable of interpreting the mapping files directly at runtime, thus eliminating the need for SMM recompilation.

In another embodiment one or more parameters of at least one of the software programs may be defined as external parameters to be resolved at link time using the SMM library. Once a mapping is defined, the associated memory space is unique throughout the system.

The invention may also relate to a computer-implemented method of managing a shared memory region, said shared memory region enabling at least two or more software programs executed at the same time to access one or more program parameters in said shared memory on the basis of mapping information, said mapping information comprising one or more parameter identifiers associated with one or more memory addresses in said shared memory region, wherein the method comprises the steps of: providing at least one modification in said mapping information; forming a shared memory management library comprising one or more parameter identifiers of said modified mapping information and one or more references to a memory location in said shared memory; and, associating a parameter identifier in said shared memory management library with a memory location in said shared memory such that said parameter identifier in said SMM library points to an address location in said shared memory in accordance with the modified mapping information.

In another aspect the invention may relate to a computer-based shared memory system comprising a computing device comprising at least one shared memory region located and/or defined in a memory of said computing device; at least two executable software programs configured to access one or more parameters stored in said shared memory region using said mapping information, and at least one shared memory management (SMM) library loaded in the memory of said computing device configured to be statically linked to at least one of the software programs and to be dynamically linked to at least part of said shared memory using said mapping information.

In yet another aspect the invention relates to a computer program product, comprising software code portions configured for, when run in the memory of a computing device, executing the method steps as described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a conventional shared memory system.
**Fig. 2** depicts a shared memory system comprising two updated modules.
**Fig. 3** depicts a shared memory system according to one embodiment of the invention.
**Fig. 4** depicts a method of managing a shared memory according to one embodiment of the invention.
**Fig. 5** depicts a shared memory system according to another embodiment of the invention

### Detailed description

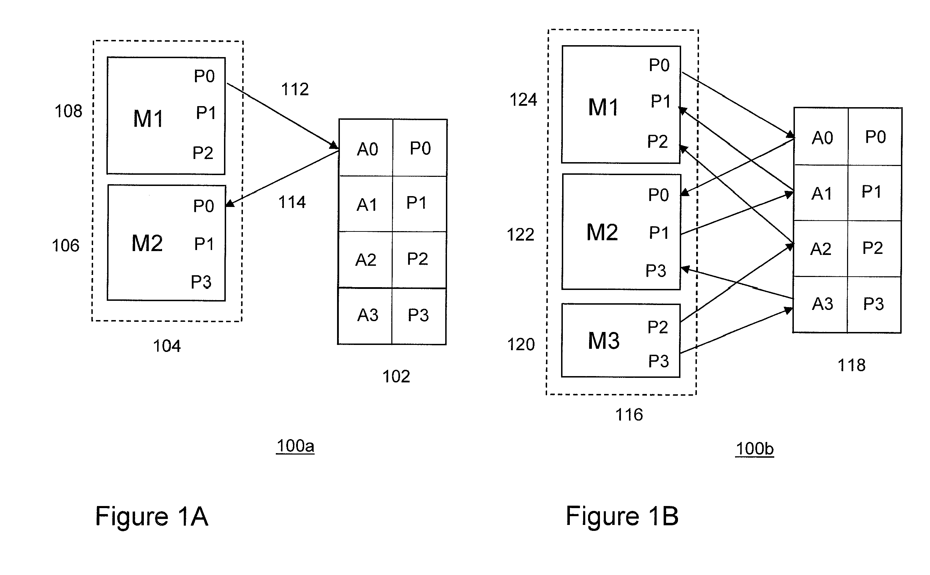

**Fig. 1A** depicts a schematic of a conventional shared memory system **100a** comprising a shared memory region **102** which can be accessed by a number of software modules M1,M2, **(106,108)** of a heterogeneous software application **104.** For the purpose of the invention, shared memory **102** relates to a memory region which is configured for inter-process communication (IPC) between two or more applications running at the same time. Using shared memory for IPC purposes allows concurrent and efficient exchange of data between programs running at the same time.

Each module may be embodied by an independent executable software program which may be executed by one or more processors in the memory, typically random access memory (RAM), of a computing device. The computing device may be a general purpose computer or a network of general purpose computers under control of an operating system (OS). An executed module may be responsive to input fed through one or more I/O ports of the computing device (e.g. a keyboard or - in case of a flight simulator - actuator control information). Further, a module may communicate through one or more I/O ports with one or more displays for displaying data and with one or more databases and other storage devices located internally and/or externally to the computing device.

The shared memory may comprise a group of memory locations in the computing device specifically reserved for the modules, wherein the address space of each module overlaps in the shared memory. The information stored in the memory locations may thus be accessible by any module to which the memory locations are made available through sharing. Typically, each memory location in the shared memory may store a certain parameter shared by the modules of a software application, typically an heterogeneous software application. In one embodiment, the software application may relate to a heterogeneous flight simulation program wherein at least part of the parameters in the shared memory relate to flight simulation parameters, i.e. parameters associated with one or more aircraft sensors (height, speed, etc.), actuator dynamics, engine information, pilot input information, etc.

Parameters may vary in size, i.e. a single byte (flags), two, four, and/or eight bytes. In order to associate a memory location in the shared memory to a certain parameter, mapping information is provided. The mapping information (i.e. the shared memory map) may be used by a module to identify and interpret the content of memory locations in the shared memory. To that end, the mapping information may comprise at least parameter identifiers associated with the memory addresses of the shared memory. Further, the mapping information may comprise a description of its content in terms of encoding and/or meaning.

In **Fig. 1A** a mapping is schematically depicted by address locations A0-A3 and their corresponding parameter identifiers P0-P3. A first module **108,** e.g. an application for reading a parameter associated with the airplane steering column in the cockpit of an flight simulator, may generate a parameter P0 and write this value via a write operation **112** into memory location A0 according to the mapping. A second module **106,** e.g. the motion controller of the flight simulator, may subsequently read the parameter P0 by reading the content of address location A0 using a read operation **114.**

In general, most modules in the shared memory software application may produce one or more output parameters on the basis of one or more input parameters. This is schematically depicted in **Fig. 1B** depicting at least a part of a shared memory system **100b** comprising a shared memory software application **116** and at least two modules M1 and M2 which are statically linked to at least one shared memory region **118.** Module M1 **124** produces a value associated with parameter identifier P0 on the basis of the input values associated with parameters identifiers P1 and P2 respectively. Similarly, module M2 **122** requires parameters P0 and P3 to produce P1 and module M3 **120** produces the parameters P2 and P3. Hence, on the basis of the mapping {P0,P1,P2,P3} of the shared memory, the modules are capable of reading and writing the required parameters from and to the shared memory.

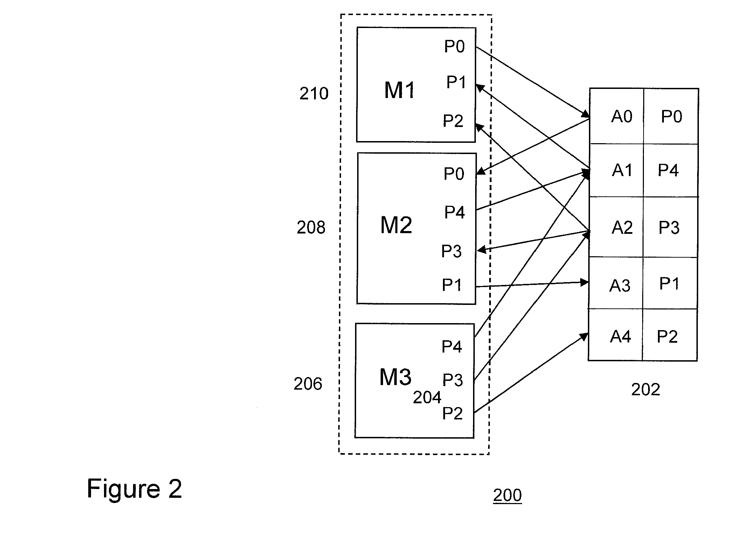

An update or a new release of one or more software modules may cause changes in the mapping of the shared memory. This situation is shown in **Fig. 2** illustrating a shared memory system **200** comprising a shared memory software application **204** and a shared memory **202.** An update of the software application may introduce a modification of the existing mapping, e.g. a new parameter P4 in modules M2 **208** and M3 **206** so that extension of the shared memory with a new parameter identifier P4 is required. Further, for reasons not specified here due to the illustrative characteristic of this example, the update may require P4 to be mapped right after P1, and P3 to be located directly after P4, thus resulting in a new mapping {P0,P4,P3,P1,P2} of the shared memory. Recompilation of the amended software code associated with M2 and M3 allows these updated modules to correctly access the parameters based on the new mapping. If however for some reason module M1 **210** is not or not correctly compiled, problems will occur as this module will still write and read the parameters on the basis of the old mapping (i.e. reading P4 and P3 instead of P1 and P2, respectively) thereby producing an unpredictable outcome.

On the basis of the problem as illustrated in **Fig. 2****,** it is clear that when extending the complexity of the shared memory to a commonly used size, i.e. hundreds or even thousands of parameters shared by many modules, tracing error sources may become very difficult if not impossible. Hence, in order minimize the chance of errors, each software update in principle would require the recompilation of all modules in the project.

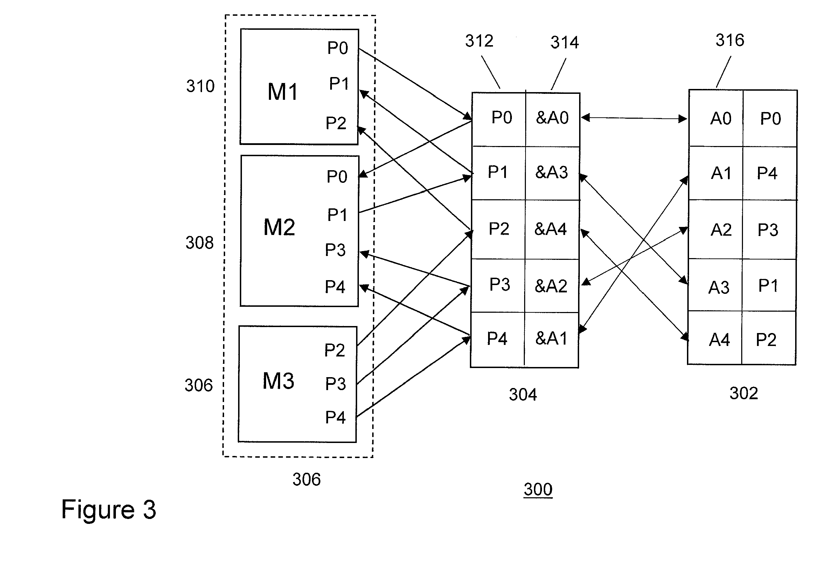

**Fig. 3** depicts a schematic of a at least part of a shared memory system **300** according one embodiment of the invention comprising a software application **306** and a shared memory **302.** This embodiment is illustrated using the same modifications to the existing mapping information as described in relation to **Fig. 2****,** i.e. an update requiring the introduction of a new parameter P4 used by M2 **308** and M3 **306,** recompilation of M2 and M3 and a new mapping {P0,P4,P3,P1,P2}.

In this case however the parameters in the updated modules are not statically (i.e. directly) linked to the shared memory **302.** Instead, their addresses are obtained by an explicit request to the shared memory management (SMM) library **304.** The SMM library may be formed on the basis of the new mapping information and stored in the memory of the computing device. The library may comprise a list of all parameters identifiers {P0,P1,P2,P3,P4} used in the new memory mapping. In other embodiments the libraries may comprise at least a part of the parameter identifiers. The order of parameter identifiers in the SMM library may be arbitrary. Alternatively, the order may be optimized for an efficient search in the parameter list. To that end, in one embodiment, the list of parameter identifiers may be an alphabetized index list while still occupying in memory the same contiguous locations specified by the mapping text files. This may enable code references to blocks of consecutive memory locations either individually or as complex structures/classes.

Using the SMM library for each parameter identifier **312** {P0,P1,P2,P3,P4} in the library, an associated address reference **314** {&A0,&A3,&A4,&A2,&A1} to a memory location **316** {A0,A1,A2,A3,A4} in the shared memory **302** may be provided. The assignment of the address references to the parameters identifiers in the SMM library is such that each parameter in the library points to an address location in the shared memory according to the new mapping information.

For example, according to the SMM library as depicted in **Fig. 3****,** parameter P4 should be associated with an address reference &A1 pointing to address location A1 in which - according to the new mapping information - the value of parameter identifier P4 is stored. Similarly, the SMM library associates parameter identifier P1 to the address reference &A3 thereby identifying address A3 in the shared memory - in accordance with the new memory mapping - as the address which comprises the value of parameter identifier P1.

Although not depicted in **Fig. 3****,** it is clear that the invention is not limited to new mappings relating to the addition of one parameter. The invention equally works with updates of one or more modules involving the extension, reduction, and/or swapping of parameters in the parameter pool. Moreover, in general, modules only require recompilation when a new parameter is added and used in that module. If an update of a module only involves a change in the sequence of the parameters in the shared memory, using the SMM library completely eliminates the need for recompilation.

Hence, the SMM library allows linking of the modules to a shared memory in accordance with the new memory mapping without the need to recompile all modules (e.g. module M1 in the example of **Fig. 3****).** The library takes care of resolving which address should be used at start-up. Module M1 is not recompiled, but accesses the correct memory locations by using the SMM library. As a consequence, the only modules that need to be recompiled are those which prompted the mapping changes in the first place (because they use the newly added parameters which are only present in the new mapping), while all other modules are kept unchanged. In other words, using the SMM library makes the new mapping backwards compatible irrespective whether the mapping may have been extended or reduced in one or more places, swapped or switched around.

Further, the use of the SMM library greatly improves the traceability of errors, since a module with an old file timestamp which is known to work well is now unlikely to cause new bugs only as a consequence of the shared memory mapping upgraded. The chance of generating errors, which are hard to find, are thus reduced and the only mismatch likely to occur is between the SMM library and the mapping file.

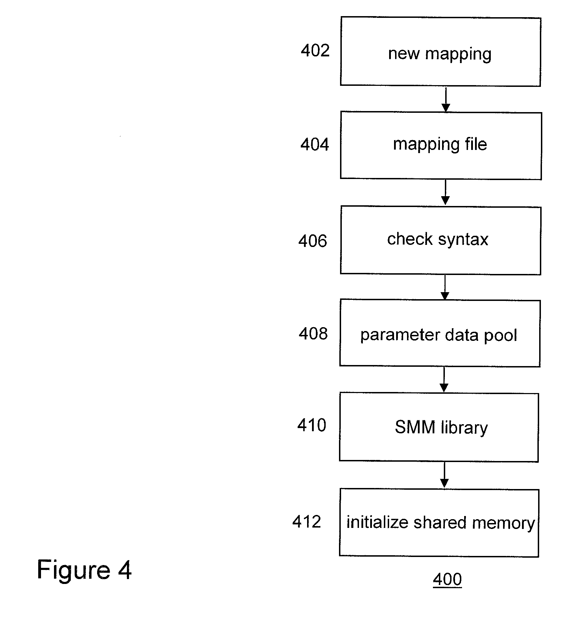

**Fig. 4** depicts a schematic of an exemplary method **400** according to the invention. The illustrated method is adapted for use with a Microsoft Windows operating system. The process starts with a first step **402** wherein a new mapping is decided. Thereafter, the mapping may be written into a mapping file (step **404).** An example of part of such mapping file may be:

| | | | | |
|---|---|---|---|---|
| OP_33_FREEZE_B1 | BOOL | 0 | comment units | |
| OP_49_FREEZE_B1 | BOOL | 0 | comment units | |
| OP_33_RESET_B1 | BOOL | 0 | comment units | |
| OP_49_RESET_B1 | BOOL | 0 | comment units | |
| # | | | | |
| # Sample arrays | | | | |
| # | | | | |
| # Monodimensional | | | | |
| GI_34_NAME_I4 | BLK_INT | | 10*0 | comment units |
| # | | | | |
| # bidimensional | | | | |
| GI_35_NAME_F4 | BLK_FLOAT | | 5*2*0 | comment units |
| # | | | | |
| # tridimensional | | | | |
| GO_36_NAME_F8 | BLK_DOUBLE | | 3*3*3*0 | comment units |

The structure of the mapping file - a text file - is simple and intuitive. Each parameter is at least identified by name and one or more other parameter characteristics, e.g. basic type (IEEE floating point, double precision, integer, character or Boolean), initial default value, the number of array elements if any, its physical units and/or a comment or description. Preferably the file comprises one parameter per line, in as many text files as necessary. The sequence of the parameter in the file reflects the mapping of the memory locations of the shared memory.

Thereafter, in a next step **406** a new mapping may be created by a computer program which checks the shared memory text file definitions for syntax correctness and in turn may create an indexed single binary file called "parameter data pool" (step **408).** The purpose of this file is to offer an equivalent view of the mapping files in binary format. This file is also loaded on start-up/runtime in a separate memory. The information contained in the parameter data pool file is equivalent to that in the mapping files, but it is pre-ordered and quickly accessible by the SMM library without any computational expense.

Additionally, the program generates a few files containing code intended for inclusion by the users and called "header files". For example, on the basis of a mapping file as described above, the program may generate the following header file:
extern SDC_API bool &OP_33_FREEZE_B1;
extern SDC_API bool &OP_49_FREEZE_B1;
extern SDC_API bool &OP_33_RESET_B1;
extern SDC_API bool &OP_49_RESET_B1;
extern SDC_API int *GI_34_NAME_I4;
extern SDC_API float (*GI_35_NAME_F4)[2];
extern SDC_API double (*GO_36_NAME_F8)[3][3];

Thereafter the SMM library is provided (step **410)** comprising for each parameter in the new mapping an address reference to the memory locations of the shared memory in accordance with the new mapping.

The mapping files may specify all the parameters in the data pool as external parameters to be resolved at link time. The association of the named parameters to the SMM library is done via static linking with the SMM library. Upon runtime initialization of the shared memory segment, all the external parameters are assigned an address which is dynamically determined just once using the SMM library, based on the current memory mapping found at runtime in the parameter data pool (step **412).**

The steps described above will need to be repeated every time the mapping files are changed, as this operation coincides with the shared memory mapping upgrade. The old parameter data pool file, management library and the modules that were recompiled are then replaced with new ones. This operation is straightforward and replaces the recompilation of all the modules. This mechanism presents a static linkage of the parameters to the modules, while being dynamic in reality, thereby offering the advantages of both approaches in a single integrated solution.

The above process provides significant advantages over conventional development techniques for heterogeneous software based on e.g. static linking. For example, in the course of the development of a new flight simulation project (e.g. a standard twin jet engine passenger aircraft) a group of about eight software developers may build a shared memory database comprising at the end to over 100 thousand parameters, each of various size.

During the development process, every day the software developers add new parameters (or modifications) to a common repository. At the end of each day one designated programmer collects all the database changes and merge them together, creates a new global map and subsequently recompiles the entire project so to eliminate possibilities of mismatches. Only after recompilation, typically the next day, the developers may use the newly introduced parameter. This recompilation process of about one or two hours would take place almost every single day of the project.

In contrast, when using the shared memory management method according to the invention, parameter changes are immediately available to the developers. The database may be updated by a developer in a few seconds and there is no need for a complete recompilation except from the parts of the code making use of the new parameters. Hence, even for such relatively small-scale projects, the time and money saved by the invention is considerable.

In one aspect the invention, and in particular the use of one or more mapping files, provides a number of advantages for developing software. The use of mapping files allows memory mapping changes by simple modifications of the file associated to the parameter definition and by running a single script. Once a mapping is defined, the associated memory space is unique throughout the system.

As the actual memory mapping is closely mirrored by the definitions in the mapping files, several consecutive parameters may be addressed indifferently as an array, individually or even grouped in a structure or class, since contiguity in the shared memory space is guaranteed. Further, in one embodiment the method uses parameter aliases, so that the same memory location can be accessed with two or more different names. This is particularly useful when dealing with interfaces and data communication structures, because it saves a great deal of data copying and enhanced flexibility thereby reducing the loss of performance and waste of memory resources.

In another aspect the invention allows the shared memory system to be easily optimized for real time applications. In one embodiment, the shared memory mapping is loaded into memory at start-up so that once initialized, the shared memory application does not require any runtime disc access, thereby greatly improving processing speed. Fast parameter search by alphabetized indexing is another useful feature implemented.

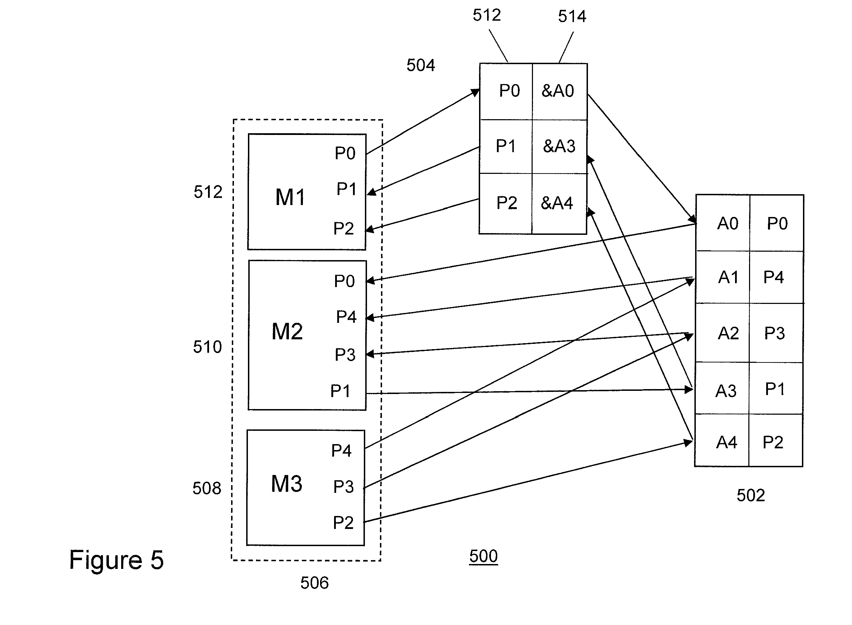

It is to be understood that the invention is not limited to the example in **Fig. 3****.** **Fig. 5** depicts a schematic of shared memory system **500** representing a variant of the system as described in relation to **Fig. 3****.** In this embodiment, modules M2 **510** and M3 **508** are directly, i.e. statically, linked to the shared memory **502** (in the same way as described in **Fig. 1****)** and module M3 **512** is dynamically linked to the same shared memory by explicit requests to the SMM library (in a similar as described in **Fig. 3****).**

It is also to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Furthermore, equivalents and modifications not described above may also be employed without departing from the scope of the invention, which is defined in the accompanying claims.

## Claims

1. A computer-implemented method of managing a shared memory region,, said shared memory region enabling at least two or more software programs executed at the same time to access one or more program parameters in said shared memory on the basis of mapping information, said mapping information comprising one or more parameter identifiers associated with one or more memory addresses in said shared memory region, the method comprising the steps of:
- providing at least one modification in the mapping information; and,
- providing at least one shared memory management (SMM) library configured to be statically linked to at least one of said software programs and to be dynamically linked to at least part of said shared memory region in accordance with the modified mapping information.

2. Method according to claim 1, wherein the SMM library comprises one or more parameter identifiers and associated references to one or more memory addresses in said shared memory region, the SMM library enabling at least one of said programs to access at least part of said shared memory region in accordance with said modified mapping information.

3. Method according to claims 1 or 2, wherein the SMM library comprises for a parameter in the mapping information an associated reference to a memory address in said shared memory region.

4. Method according to any of claims 1 to 3, the method further comprises:
- assigning an address location in the shared memory region to at least one parameter in the SMM library.

5. Method according to any of claims 1 to 4, wherein the mapping information is provided by one or more mapping files, preferably in plain text format, comprising at least one or more parameter identifiers defining the parameter name, parameter data types used in the mapping information, default values, physical units and/or parameter comments.

6. Method according to claim 5, wherein the sequence of the parameter identifiers listed in the mapping file define the mapping.

7. Method according to any of claims 1 to 4, wherein one or more parameters of at least one of the software programs are defined as external parameters to be resolved at link time using the SMM library.

8. Method according to any of claims 1 to 4, wherein one or more parameters of at least one of the software programs are arranged to link by name to the SMM library.

9. Method according to any of claim 1 to 8, wherein said modification is associated with: an addition of a new parameter to said shared memory region, the deletion of an existing parameter from said shared memory region and/or changes in the sequence and/or type of the parameters in said shared memory region.

10. Computer-based shared memory system comprising:
- at least one shared memory region defined in a memory of a computing device;
- at least two executable software programs configured to access at the same time one or more parameters stored in said shared memory region according to mapping information, said mapping information comprising one or more parameter identifiers associated with one or more memory addresses in said shared memory region;
- a shared memory management (SMM) library loaded in the memory of said computing device and configured to be statically linked to at least one of said software programs and to be dynamically linked to at least part of said shared memory region in accordance with said mapping information.

11. System according to claim 9, wherein the SMM library comprises one or more parameters identifiers and associated references to memory addresses in the shared memory thereby enabling at least one of the programs to access said shared memory.

12. A computer program product, comprising software code portions configured for, when run in the memory of a computing device, executing the method steps according to any of claims 1-9.
